# EUROPÄISCHE PATENTSCHRIFT

(11) **EP 2 027 382 B1**
(45) Veröffentlichungstag und Bekanntmachung des Hinweises auf die Patenterteilung: **03.03.2010**
(21) Anmeldenummer: 07722517.5
(22) Anmeldetag: 08.06.2007
(51) Int. Cl.: F02F 3/22, F02F 3/00

(54) **KOLBEN FÜR EINEN VERBRENNUNGSMOTOR UND VERFAHREN ZU DESSEN HERSTELLUNG**
PISTON FOR AN INTERNAL COMBUSTION ENGINE AND METHOD FOR ITS PRODUCTION
PISTON POUR UN MOTEUR À COMBUSTION INTERNE ET PROCÉDÉ DE FABRICATION ASSOCIÉ

(30) Priorität: 13.06.2006 DE 102006027355
(43) Veröffentlichungstag der Anmeldung: 25.02.2009
(73) Patentinhaber: Mahle International GmbH, 70376 Stuttgart (DE)
(72) Erfinder: SCHARP, Rainer, 71665 Vaihingen (DE)
(74) Vertreter: Pohle, Reinhard
(86) Internationale Anmeldenummer: PCT/DE2007/001010
(87) Internationale Veröffentlichungsnummer: WO 2007/143967

(56) Entgegenhaltungen:
- DE-A1- 3 518 497
- DE-A1- 10 216 328
- DE-A1-102004 003 980
- DE-B- 1 001 862
- JP-A- 6 002 613
- US-A- 3 181 514

## Beschreibung

Die Erfindung betrifft einen Kolben für einen Verbrennungsmotor nach dem Oberbegriff des Anspruches 1 und ein Verfahren zu dessen Herstellung nach dem Oberbegriff des Anspruches 5.

Kolben mit einem Ringkanal, der der Aufnahme von Öl zum Kühlen des Kolbenbodens und der Ringpartie dient, und der ausgehend vom Kolbenboden mittels eines spanenden Fertigungsverfahrens in den Kolbenkörper eingebracht und anschließend verschlossen wird, sind aus dem Stand der Technik weitgehend bekannt.

Aus der Deutschen Offenlegungsschrift 20 17 925 und aus der Deutschen Patentschrift 12 51 588 ist es bekannt, den in den Kolbenboden eingebrachten Ringkanal mit einem ringförmigen Verschlusselement zu verschließen, das in dem Ringkanal unter Anwendung des Ladungsträger-Schweißverfahrens befestigt wird. Die Nachteile dieses Schweißverfahrens bestehen darin, dass es sehr zeit- und energieaufwendig und wegen der Menge der hierbei zu beachtenden Parameter sehr kompliziert ist.

Aus der Deutschen Patentschrift 10 25 221, aus der Britischen Patentschrift 853,382 und aus der US-Patentschrift 3,181,514 ist bekannt, einen in den Kolbenboden eingebrachten Ringkanal zunächst mit einem Ringelement zu verschließen, damit in eine darüber befindliche Nut eingefülltes, flüssiges Metall zum Verschließen des Ringkanals nicht in den Ringkanal fließt. Hierzu sind mehrere Verfahrensschritte erforderlich, die dieses Verfahren zur Herstellung eines Ringkanals sehr kompliziert und zeitaufwendig gestalten.

Hiervon ausgehend liegt der Erfindung die Aufgabe zugrunde, die genannten Nachteile des Standes der Technik zu vermeiden und ein Verfahren zur Herstellung eines Kolbens mit einem Ringkanal zur Aufnahme von Kühlöl zum Kühlen des Kolbenbodens und der Ringpartie zu schaffen, das einfach und mit geringem Zeit- und Energieaufwand ausführbar ist.

Gelöst wird diese Aufgabe mit den im Kennzeichen des Hauptanspruches und des Nebenanspruches stehenden Merkmalen. Zweckmäßige Ausgestaltungen der Erfindung sind Gegenstand der Unteransprüche.

Hierbei hat das bei der Herstellung des Kolbens gemäß der Erfindung angewandte Reibschweißverfahren die Vorteile, dass es sich wegen seiner Einfachheit gut zur Automatisierung eignet, und dass die Schweißzeiten kurz sind, was auch die Herstellungszeit des gesamten Kolbens verkürzt.

Die Erfindung wird im Folgenden anhand einer Zeichnung beschrieben. Sie zeigt einen Kolben für einen Verbrennungsmotor mit einem ringförmigen Kühlkanal, der kolbenbodenseitig mit einem ringförmigen Verschlusselement verschlossen ist.

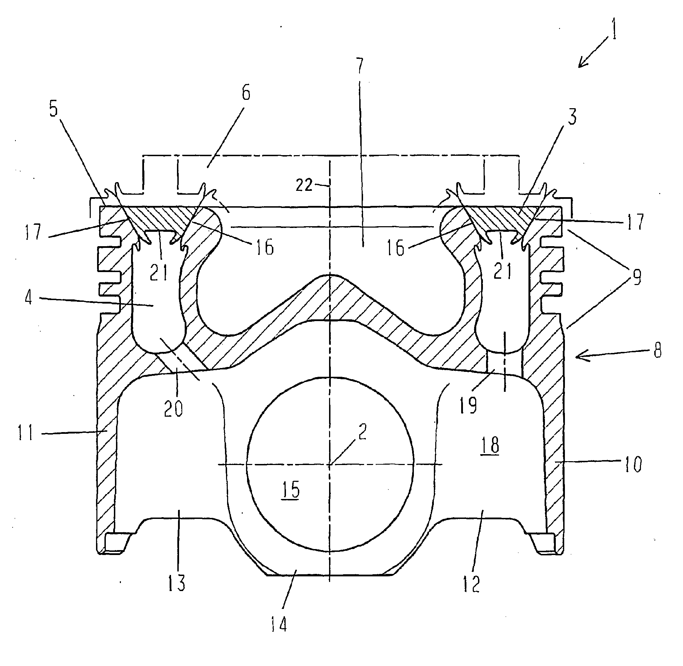

In der Figur ist ein Kolben 1 für einen Verbrennungsmotor in einem quer zur Bolzenachse 2 liegenden Schnittbild dargestellt, in das die Konturen des Kolbens 1 nach der Feinbearbeitung und ein ringförmiges Verschlusselement 3 zum Verschließen eines Ringkanals 4 mit einer Halterung 6 eingezeichnet sind, über die das Verschlusselement 3 in eine in der Figur nicht dargestellte Reibschweißvorrichtung eingespannt wird. Die Halterung 6 hat im Schnitt die Form eines Pfeils, dessen Spitze von dem Verschlusselement 3 gebildet wird.

Der Kolben 1 weist einen Kolbenboden 5 mit einer darin eingeformte Verbrennungsmulde 7 auf. Radial außen ist nahe dem Kolbenboden 5 in die Mantelfläche 8 des zylinderförmigen Kolbens 1 eine aus drei Kolbenringnuten bestehende Ringpartie 9 eingearbeitet. Zwischen der Verbrennungsmulde 7 und der Ringspartie 9 ist der geschlossene Ringkanal 4 angeordnet, der kolbenbodenseitig mit dem Verschlusselement 3 verschlossen ist, das im Schnitt die Form eines gleichschenkligen Trapezes mit in kolbenbodenabgewandte Richtung konisch zulaufenden Seitenflächen 16, 17 aufweist. Über die Seitenflächen 16, 17 ist das Verschlusselement 3 mit dem Kolbenboden 5 mittels des Reibschweißverfahrens verschweißt. Der Ringkanal 4 weist eine Ölzulauföffnung 19 und eine Ölablauföffnung 20 auf, die den Ringkanal 4 mit dem Kolbeninnenraum 18 verbinden.

In kolbenbodenabgewandte Richtung schließen sich an die Ringpartie 9 zwei einander gegenüberliegende Schaftelemente 10 und 11 an, die jeweils beidseitig über Verbindungsstege 12 und 13 mit zwei einander gegenüberliegenden Bolzennaben verbunden sind, von denen wegen der Lage des Schnittes in der Figur nur die Bolzennabe 14 mit einer Bolzenbohrung 15 in Draufsicht dargestellt ist.

Hergestellt sind der Kolben 1 und das Verschlusselement 3 aus Stahl, wodurch dem Kolben 1 eine relativ große Festigkeit und Belastbarkeit verliehen wird. Im Rahmen des Herstellungsprozesses wird zunächst ein Rohling aus Stahl geschmiedet, der die groben Umrisse des Kolbens 1 mit Ausnehmungen für die Verbrennungsmulde 7 und den Kolbeninnenraum 18 aufweist. Im Anschluss daran erfolgt die Feinbearbeitung des Kolbens 1 unter Anwendung spanender Fertigungsverfahren, wie Drehen, Fräsen und Bohren. Hergestellt werden hierdurch die Bolzenbohrungen 15, die Ringpartie 9 mit den Kolbenringnuten, die radial äußeren Flächen der Schaftelemente 10 und 11 und die Brennraummulde 7.

Anschließend wird mittels eines spanenden Fertigungsverfahrens in den radial äußeren Bereich des Kolbenbodens 5 zwischen Brennraummulde 7 und dem äußeren Rand des Kolbenbodens 5 in Richtung der Kolbenachse 22 eine Ausnehmung eingeformt, die die Form des Ringkanals 4 hat und kolbenbodenseitig eine ringförmige Öffnung 21 aufweist, die im Querschnitt die gleiche Trapezform wie das Verschlusselement 3 hat. Vom Kolbeninnenraum 18 aus wird in den so entstandenen Ringkanal 4 eine Ölzulauföffnung 19 und eine Ölablauföffnung 20 gebohrt.

Unter Anwendung des Reibschweißverfahrens wird dann der Ringkanal 4 verschlossen, wobei der fertig bearbeitete Kolben 1 in das feststehendes Futter einer Reibschweißvorrichtung und die Halterung 6 mit dem Verschlusselement 3 in das drehbare Futter der Reibschweißvorrichtung gespannt werden. Das drehbare Futter wird in Rotation versetzt, und das sich drehende Verschlusselement 3 wird in die ringförmige Öffnung 21 im Boden 5 des feststehenden Kolbens 1 gedrückt, wobei sich in den Seitenflächen 16 und 17 des Verschlusselementes 3 und in den radialen Außenflächen der Öffnung 21 wegen der Relativbewegung zwischen dem Kolben 1 und dem Verschlusselement 3 Reibungswärme bildet. Nach ausreichender Wärmeentwicklung wird die Relativbewegung aufgehoben und das Verschlusselement 3 unter erhöhter Kraft in die Öffnung 21 gefügt. Aufgrund der hierdurch entstehenden Schweißverbindung zwischen dem Kolbenboden 5 und dem Verschlusselement 3 wird die Öffnung 21 des Ringkanals 4 verschlossen.

Die Vorteile des Reibschweißverfahrens bestehen darin, dass es sich gut zur Automatisierung eignet, und dass die Schweißzeiten relativ kurz sind.

In letzten Verfahrensschritten wird die Halterung 6 vom Verschlusselement 3 abgetrennt und die Oberfläche des Kolbenbodens 5 geglättet.

### Bezugszeichenliste

- 1: Kolben
- 2: Bolzenachse
- 3: Verschlusselement
- 4: Ringkanal
- 5: Kolbenboden
- 6: Halterung des Verschlusselementes 3
- 7: Verbrennungsmulde
- 8: Mantelfläche
- 9: Ringpartie
- 10,11: Schaftelement
- 12,13: Verbindungssteg
- 14: Bolzennabe
- 15: Bolzenbohrung
- 16,17: Seitenfläche des Verschlusselementes 3
- 18: Kolbeninnenraum
- 19: Ölzulauföffnung
- 20: Ölablauföffnung
- 21: ringförmige Öffnung
- 22: Kolbenachse

## Patentansprüche

1. Kolben (1) für einen Verbrennungsmotor
- mit einem Kolbenboden (5),
- mit einer nahe dem Kolbenboden (5) und auf der radialen Außenseite des Kolbens (1) angeordneten Ringpartie (9),
- mit einem nahe dem Kolbenboden (5) und radial außen angeordneten Ringkanal (4), der kolbenbodenseitig eine ringförmige Öffnung (21) aufweist, die im Schnitt die Form eines Trapezes mit in kolbenbodenabgewandte Richtung konisch zulaufenden Schenkeln hat, wobei der Ringkanal (4) über eine Ölzulauföffnung (19) und eine Ölablauföffnung (20) mit dem Kolbeninnenraum (18) verbunden ist,
- mit in kolbenbodenabgewandte Richtung sich an die Ringpartie (9) anschließenden, einander gegenüberliegenden Schaftelementen (10, 11), und
- mit einander gegenüberliegenden und mit den Schaftelementen (10, 11) verbundenen Bolzennaben (14) mit je einer Bolzenbohrung (15),
**dadurch gekennzeichnet, dass** die Öffnung (21) von einem ringförmigen Verschlusselement (3) verschlossen ist, das im Schnitt die gleiche Trapezform wie die Öffnung (21) aufweist, sodass das Verschlusselement (3) in der Öffnung (21) mittels eines Reibschweißverfahrens befestigbar ist.

2. Kolben (1) nach Anspruch 1, **dadurch gekennzeichnet, dass** die Öffnung (21) und das Verschlusselement (3) im Schnitt die Form eines gleichschenkligen Trapezes haben.

3. Kolben (1) nach Anspruch 1 oder 2, **dadurch gekennzeichnet, dass** er aus Stahl besteht.

4. Kolben (1) nach einem der Ansprüche 1 bis 3, **dadurch gekennzeichnet, dass** das Verschlusselement (3) aus Stahl besteht.

5. Verfahren zur Herstellung eines Kolbens (1) für einen Verbrennungsmotor mit folgenden Verfahrensschritten:
- Schmieden eines Kolbenrohlings mit einer Ausnehmung für den Kolbeninnenraum(18),
- Feinbearbeiten des Kolbenrohlings unter Anwendung eines oder mehrerer spanender Fertigungsverfahren zur Herstellung von Bolzenbohrungen (15), einer Ringspartie (9) und der radial äußeren Flächen von Schaftelementen (10,11),
- Einformen einer in Richtung der Kolbenachse (22) liegenden Ausnehmung zur Verwendung als Ringkanal (4) mit einer ringförmigen, kolbenbodenseitigen Öffnung (21) ausgehend vom Kolbenboden (5) unter Anwendung eines spanenden Fertigungsverfahrens, wobei die Öffnung (21) im Schnitt die Form eines Trapezes mit in kolbenbodenabgewandte Richtung konisch zulaufenden Schenkeln hat, und
- Einbringen einer Ölzulauföffnung (19) und einer Ölablauföffnung (20) in den Ringkanal (4),
**gekennzeichnet durch** folgende Verfahrensschritte:
- Herstellen eines ringförmigen Verschlusselementes (3), das den gleichen radialen Durchmesser und die gleiche Querschnittsform wie die Öffnung (21) aufweist, und
- Befestigen des Verschlusselementes (3) in der Öffnung (21) unter Anwendung eines Reibschweißverfahrens.

6. Verfahren zur Herstellung eines Kolbens (1) nach Anspruch 5, **gekennzeichnet durch** die Verwendung von Stahl zum Schmieden des Kolbenrohlings.

7. Verfahren zur Herstellung eines Kolbens (1) nach Anspruch 5 oder 6, **gekennzeichnet durch** die Verwendung von Stahl zur Herstellung des Verschlusselementes (3).

## Claims

1. Piston (1) for an internal combustion engine
- having a piston crown (5)
- having a ring zone (9) arranged close to the piston crown (5) and on the radial exterior of the piston (1),
- having an annular channel (4) arranged close to the piston crown (5) and on the radial exterior which has on the piston crown side an annular opening (21) that in section has the form of a trapezoid with sides conically tapering in the direction away from the piston crown (1), the annular channel (4) being connected to the piston interior (18) via an oil inlet opening (19) and an oil outlet opening (20),
- having skirt elements (10, 11) opposite one another and adjoining the ring zone (9) in the direction away from the piston crown, and
- having pin bosses (14) opposite one another and connected to the skirt elements (10, 11) each with one pin bore (15),
**characterized in that** the opening (21) is closed by an annular sealing element (3) that in section has the same trapezoidal form as the opening (21), so that the sealing element (3) can be fastened inside the opening (21) by means of a friction welding process.

2. Piston (1) according to Claim 1, **characterized in that** the opening (21) and the sealing element (3) have in section the form of an equilateral trapezoid.

3. Piston (1) according to Claim 1 or 2, **characterized in that** it comprises steel.

4. Piston (1) according to one of Claims 1 to 3, **characterized in that** the sealing element (3) comprises steel.

5. Method for production of a piston (1) for an internal combustion engine having the following method steps:
- forging of a piston blank with a recess for the piston interior (18),
- fine-machining of the piston blank using one or more metal-cutting production methods for making pin bores (15), a ring zone (9) and the radially exterior surfaces of skirt elements (10, 11),
- integral casting of a recess in the direction of the piston axis (22) for use as an annular channel (4) with an annular opening (21) on the piston crown side and extending from the piston crown (5) using a metal-cutting production method, where the opening (21) has in section the form of a trapezoid with sides conically tapering in the direction away from the piston crown, and
- providing of an oil inlet opening (19) and an oil outlet opening (20) in the annular channel (4),
**characterized by** the following method steps:
- producing of an annular sealing element (3) having the same radial diameter and the same cross-sectional form as the opening (21) and
- fastening of the sealing element (3) in the opening (21) using a friction welding process.

6. Method for production of a piston (1) in accordance with Claim 5, **characterized by** the use of steel for forging the piston blank.

7. Method for production of a piston (1) in accordance with Claim 5 or 6, **characterized by** the use of steel for producing the sealing element (3).

## Revendications

1. Piston (1) pour un moteur à combustion
- avec une tête de piston (5),
- avec une partie segment (9) disposée à proximité de la tête de piston (5) et sur le côté extérieur radial du piston (1),
- avec un canal annulaire (4) disposé à proximité de la tête de piston (5) et radialement à l'extérieur, lequel présente du côté de la tête de piston une ouverture annulaire (21) qui, en coupe, a la forme d'un trapèze avec des côtés formant un cône dans la direction opposée à la tête de piston, le canal annulaire (4) étant relié à l'espace intérieur (18) du piston par une ouverture d'alimentation d'huile (19) et un ouverture d'évacuation d'huile (20),
- avec des éléments de tige (10, 11) opposés s'accolant à la partie segment (9) dans la direction opposée à la tête de piston, et
- avec des moyeux d'axe (14), opposés les uns par rapport aux autres et reliés aux éléments de tige (10, 11), présentant respectivement un orifice d'axe (15),
**caractérisé en ce que** l'ouverture (21) est fermée par un élément d'obturation annulaire (3) qui, en coupe, présente la même forme trapézoïdale que l'ouverture (21), si bien que l'élément d'obturation (3) peut être fixé dans l'ouverture (21) à l'aide d'un procédé de soudage par friction.

2. Piston (1) selon la revendication 1, **caractérisé en ce que** l'ouverture (21) et l'élément d'obturation (3) présentent en coupe la forme d'un trapèze isocèle.

3. Piston (1) selon la revendication 1 ou 2, **caractérisé en ce qu'**il est en acier.

4. Piston (1) selon l'une des revendications 1 à 3, **caractérisé en ce que** l'élément d'obturation (3) est en acier.

5. Procédé de fabrication d'un piston (1) pour un moteur à combustion, composé des étapes suivantes :
- Forgeage d'une pièce brute pour piston avec un évidement pour l'espace intérieur du piston (18),
- Finition de la pièce brute en utilisant un ou plusieurs procédés de finition et façonnage pour fabriquer les orifices d'axe (15), une partie segment (9) et les surfaces radialement extérieures d'éléments de tige (10, 11),
- Formation d'un évidement dans la direction de l'axe du piston (22) destiné à être utilisé comme canal annulaire (4) avec une ouverture annulaire (21) du côté de la tête de piston, partant de la tête de piston (5), en utilisant un procédé de finition et façonnage, l'ouverture (21) présentant en coupe la forme d'un trapèze avec des côtés formant un cône dans la direction opposée à la tête de piston, et
- mise en place d'une ouverture d'alimentation d'huile (19) et d'une ouverture d'évacuation d'huile (20) dans le canal annulaire (4),
**caractérisé par** les étapes suivantes :
- fabrication d'un élément d'obturation (3) de forme annulaire présentant le même diamètre radial et la même coupe que l'ouverture (21), et
- fixation de l'élément d'obturation (3) dans l'ouverture (21) en utilisant un procédé de soudage par friction.

6. Procédé de fabrication d'un piston (1) selon la revendication 5, **caractérisé par** l'utilisation d'acier pour forger la pièce brute pour le piston.

7. Procédé de fabrication d'un piston (1) selon la revendication 5 ou 6, **caractérisé par** l'utilisation d'acier pour fabriquer l'élément d'obturation (3).
